# EUROPEAN PATENT SPECIFICATION

(11) **EP 2 105 324 B1**
(45) Date of publication and mention of the grant of the patent: **22.06.2011**
(21) Application number: 09156107.6
(22) Date of filing: 25.03.2009
(51) Int. Cl.: B60B 33/02, B60B 33/04, B62B 3/14

(54) **Rotatable wheel support**
Drehbare Radstütze
Support de roue rotative

(30) Priority: 28.03.2008 IT PR20080021
(43) Date of publication of application: 30.09.2009
(73) Proprietor: Spencer Italia S.R.L., 43044 Collecchio (PR) (IT)
(72) Inventor: Pizzi Spadoni, Luigi Cesare c/o SPENCER ITALIA S.R.L., 43044 Collecchio (Parma) (IT)
(74) Representative: Leone, Mario

(56) References cited:
- WO-A-98/35841
- WO-A-2005/005166
- FR-A- 2 759 049
- GB-A- 2 327 916
- US-A- 2 709 829

## Description

The present invention relates to a rotatable wheel support particularly adapted to obtain infinite positions throughout 360° relative to the fixed vertical axis of rotation of said support.

This is achieved by means of at least one spring-loaded return means, connected at one end to the fixed support and at the other to an offset lock on the nut for fastening said support.

Generic FR2759049 FR2759049 discloses a trolley of shopping, in which a low frame presenting an encasing form authorizing its fitment behind a similar low frame of another trolley, and comprising four orientable peripheral wheels of running on the ground, - a basket of transport, with an handle of operation at its rear upper end, the basket presenting an encasing general form authorizing its fitment behind a similar basket of another trolley, the basket being connected to the low frame by uprights, - intermediate a pivot unit, consisted of at least an idle wheel, laid out in contact with the ground under the low frame in intermediate longitudinal position substantially along the median longitudinal plane of the trolley, the aforementioned idle wheel rotating around an horizontal intermediate axis of rotation which, in position of progress of the trolley, is laid out in a fixed transverse orientation, - mounted intermediate the pivot unit being rotating around a vertical axis low frame and associated locking means selective allowing either its unlocking in free rotation around the said vertical axis, or its locking with the intermediate axis of rotation in the aforementioned fixed transverse orientation.

The locking means of the intermediate pivot unit are operable by an accessible lever by the user. In variant, the locking means of the intermediate pivot unit are operable by a tool such as a stem engaged by the user on a body of operation. Alternatively, the locking means of the intermediate pivot unit are requested by restoring means automatic recalling them in locking position, and by a body of operation actuated by the push of an adjacent trolley encased on the aforementioned trolley to bring the locking means towards their unlocked position in the presence of the said adjacent trolley.

The wheel disclosed in FR2759049 does not reveals return spring secured between the rear swinging part of the fork and a convenient fixed offset block located on the nut or the ring of the fork of wheel.

Said features are more important because the offset block allows can recall or return the support to alignment, for an angle other than that in which the spring unstretched.

Drawback/differences of FR2759049 respect present invention: if the support and the axis form an angle other than that in which the spring is unstretched, the action of the spring cannot recall, returns, said support to alignment. Furthermore with the presence of a fixed offset block located on the nut or the ring of the fork of wheel, and suitable to change the position of the offset fixed block, the extension of the return spring may be neutralized throughout the various angles of rotation of the support relative to the fixed axis, to obtain infinite maximum stability positions.

An object of the invention is to provide a stabilizer device for an omnidirectional wheel, which is adapted to cause the wheel to rotate upon exertion of lateral stresses or thrusts of sufficient intensity to release the stabilization system.

The advantages of the present invention particularly include self-positioning of the wheel, which will be automatically directed as desired, by adjusting the locking nut, which has an end of an elastic return means, namely a spring-loaded rod or rope, attached thereto.

The above advantage is particularly useful, for instance, in ambulance stretcher applications; here, the three-dimensional wheels may assume undesired positions.

Advantageously, with this invention, as soon as the wheels are lifted from the ground, they will automatically assume a favorable position, which does not hinder loading.

The rotatable wheel support of the present invention is characterized by the contents of the annexed claims, which will be more clearly explained in the following description of a few embodiments, which are shown by way of example and without limitation in the accompanying drawings, in which:
- Figure 1 is a front view of the swivel wheel support of this invention, in one aligned configuration;
- Figure 2 is a bottom view of Figure 1, in which the swivel wheel is omitted,
- Figure 3 is a perspective view of Figure 1,
- Figure 4 is a bottom view of the support in a rotated position in which the swivel wheel is omitted,
- Figure 5 is a perspective view of the support of figure 4,
- Figure 6 is a bottom view of the support of the invention in a rotated front position, in which the swivel wheel is omitted,
- Figure 7 is a perspective view of Figure 6,
- Figure 8 shows a prior art stretcher, having no support for omnidirectional swivel wheels according to the present invention,
- Figure 9 shows the detail A of Figure 8,
- Figure 10 shows a prior art stretcher, having no support for omnidirectional swivel wheels according to the present invention, with the wheel disposed in the front position,
- Figure 11 shows the detail A of Figure 10,
- Figure 12 is a rear view of the stretcher of Figure 10,
- Figure 13 shows an embodiment of the swivel wheel support of this invention, namely in combination with a stretcher;
- Figure 14 shows the detail A of Figure 13,
- Figure 15 is a rear view of the stretcher of Figure 13,
- Figure 16 is view of a second variant embodiment of the inventive wheel support, with a direction stabilizing system,
- Figure 17 shows three exploded views A, B, C of the wheel according to the variant of Figure 16,
- Figure 18 is a broken away and perspective detail view of the stabilizer mechanism,
- Figure 19 shows the stabilizer mechanism in its released position with the wheel rotated,
- Figure 20 shows the stabilizer mechanism engaged in its locking seat, with the wheel aligned.

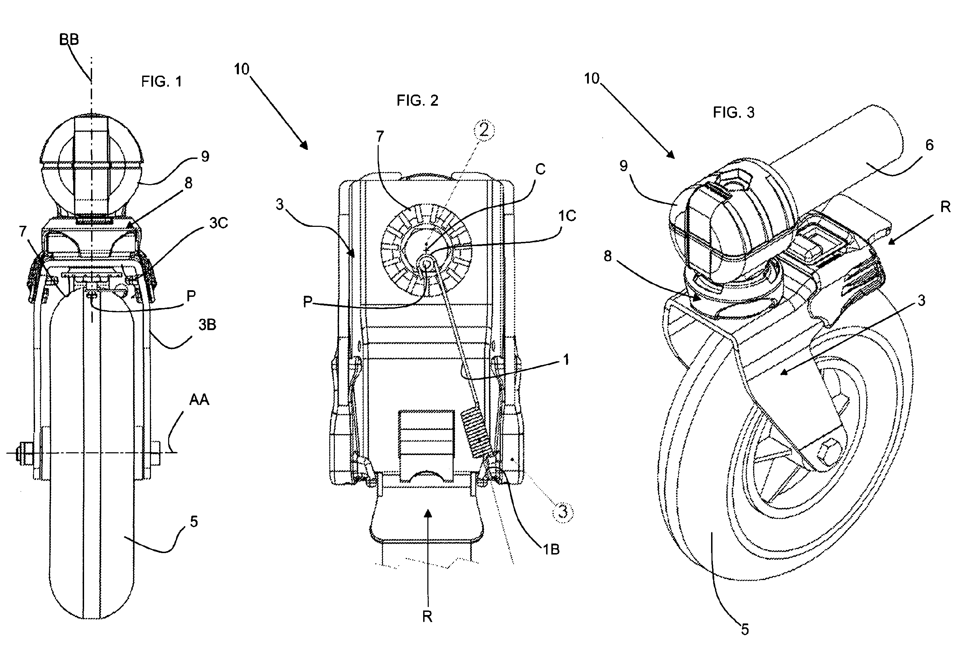

Referring to Figures 1, 2 and 3, numeral 10 generally designates a front view of a support for swivel wheels according to the present invention, of the type used for transferring carriages, stretcher, chairs, etc.

Namely, the wheel support is composed of a fork 3 with downward lateral prongs 3B for holding a wheel 5 that rotates about a substantially horizontal axis of rotation AA, parallel to the transfer plane.

The upper part of the fork 3C is integral with a corresponding support arm 6 according to prior art methods, and rotates freely about the corresponding vertical axis BB for the wheel 5 to rotate, still relative to the axis BB, at a desired angle, for better maneuverability of the carriage or stretcher or chair associated therewith.

A ring 7 is located under the cross member 3C of the support 3, and is designed to be tightened to a corresponding bearing 8, which is in turn integrated with the arm 6 via the sleeve 9; namely, the ring 7 and the bearing 8 are fastened together by a fixed nut 2.

Particularly referring to Figures 1, 2 and 4, a fixed block or pin P extends downwards from said nut 2 and is offset from the central point C of the nut 2.

The fixed block or pin P being angularly adjustable using the nut 2 or the ring 7.

The vertical axis of rotation BB of the wheel 5, about which the support 3 also rotates, also extends through said point C.

The support 3 comprises a rod 1 or a rope that is capable of being extended by the provision of a return spring M.

Such rod 1 is integrated by a first end 1B to the swinging part, whereas the other end 1C is coupled to the fixed part, namely the offset pin P.

More particularly, the end 1B is attached to the rear of the fork 3, i.e. the swinging part of the support 10, which is designated by R in the drawing of Figure 3.

Both attached ends 1B and 1C allow rotation relative to the corresponding means, i.e. the pin P and the support 3.

The configuration of Figure 2 is, for instance, a maximum stability configuration, in that the spring M is not stretched and the wheel 5 may be maintained in alignment with the arm 6.

Nevertheless, with the above configuration, if the support 3 and its wheel 5 are at an angle α relative to the axis BB, then the action of the rod or rope 1 with the spring M will afford an effective and convenient return of the wheel to alignment in the maximum stability configuration, as described above and shown in Figure 2.

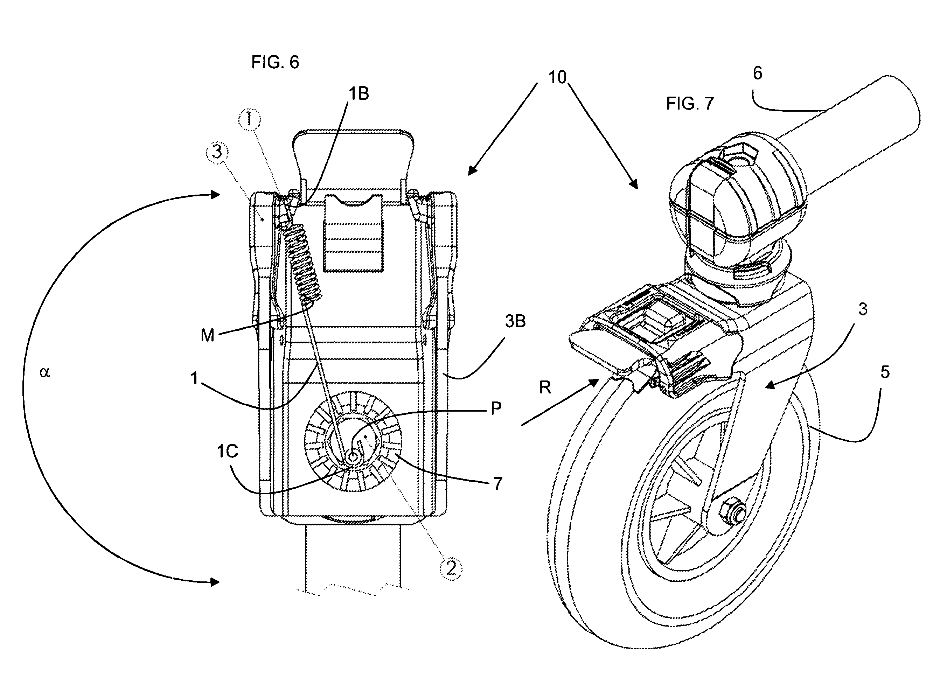

The above is shown in Figures 6 and 7.

Also, in accordance with the present invention, the nut 2 may be also used to adjust the relative position of the pin P, said position being adjusted to obtain infinite positions throughout 360° relative to the fixed axis BB, in which the wheel 5 and the support 3 are arranged in a stability configuration.

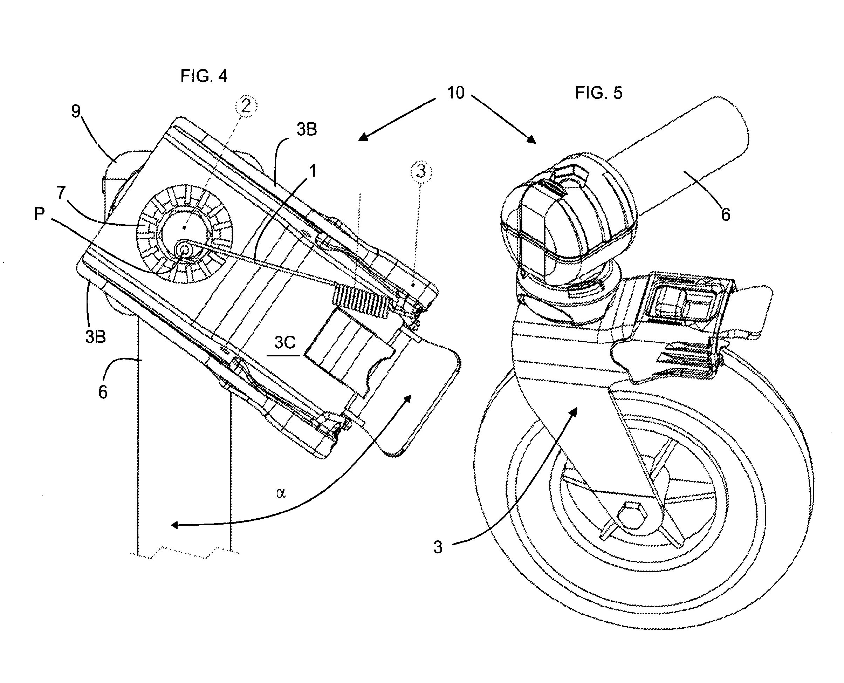

Therefore, by proper adjustment of the nut 2, the configuration of Figures 4 and 5, which has been adjusted to an instable condition, with the spring M stretched, will be returned to a stable condition, if the pin P is moved to a position in which it neutralizes the extension of the spring M.

An embodiment of the support for swivel wheels having an omnidirectional rotation system will be now described.

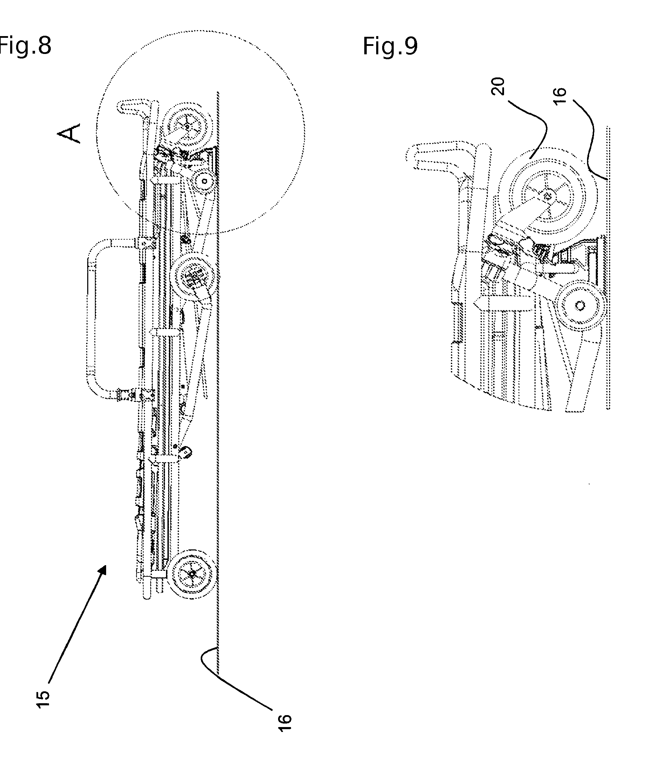

Particularly referring to Figures 8, 9, 10, 11, 12, a stretcher 15 is loaded on an ambulance floor 16, with the rear wheel support 20 having no omnidirection system of the present invention, i.e. having a traditional support system.

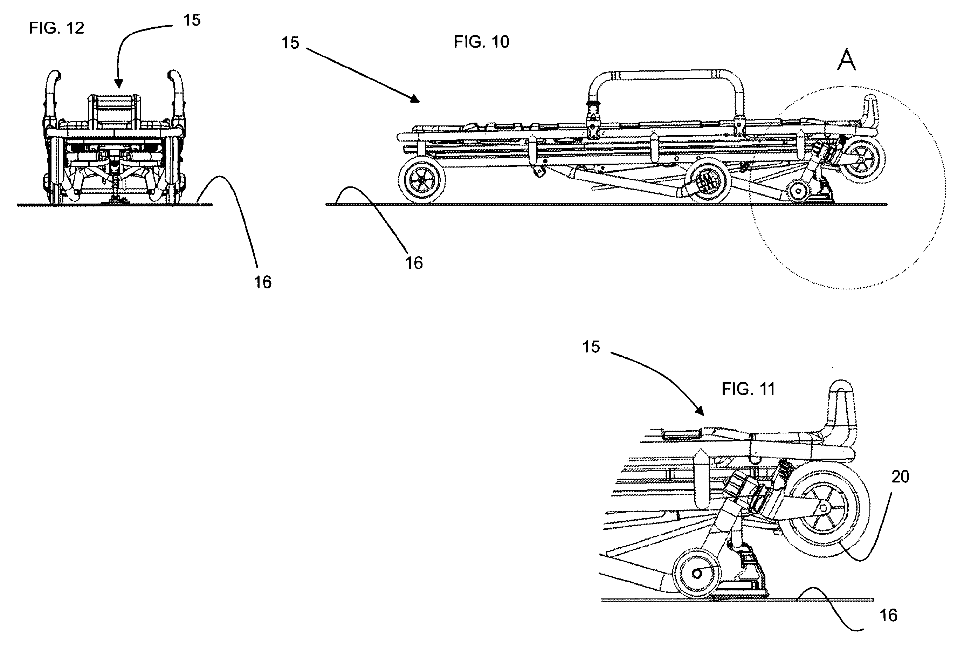

In the views of Figures 8 and 9, the wheel axle is likely to be perpendicular to the floor with the wheel facing downwards, which has no effect in terms of operation and safety of the device, whereas in the views of Figures 10, 11 and 12, the wheel axle may be still perpendicular to the floor, but with the wheel 20 facing upwards, which may cause problems in terms of operation of the device and especially user safety (difficult use and possible upper limb injury).

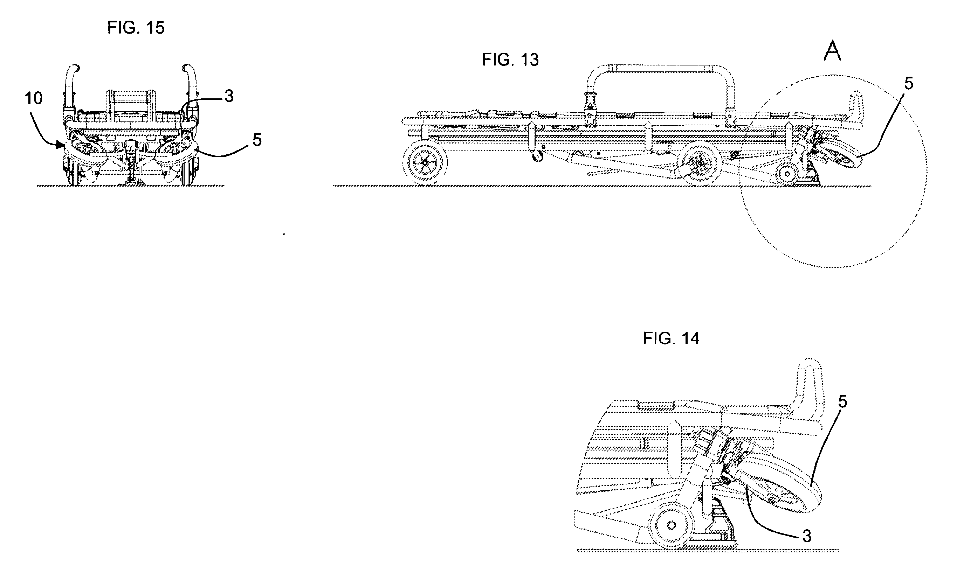

Figures 13 and 14 show the result of the use of the swivel wheel support of the invention, with the wheel 5 reaching the best position to avoid the above mentioned problems: in other words, the omnidirectional rotatable support holds the wheel at 45-50° relative to the fixed axis.

This angle may be obviously varied according to the use of the system.

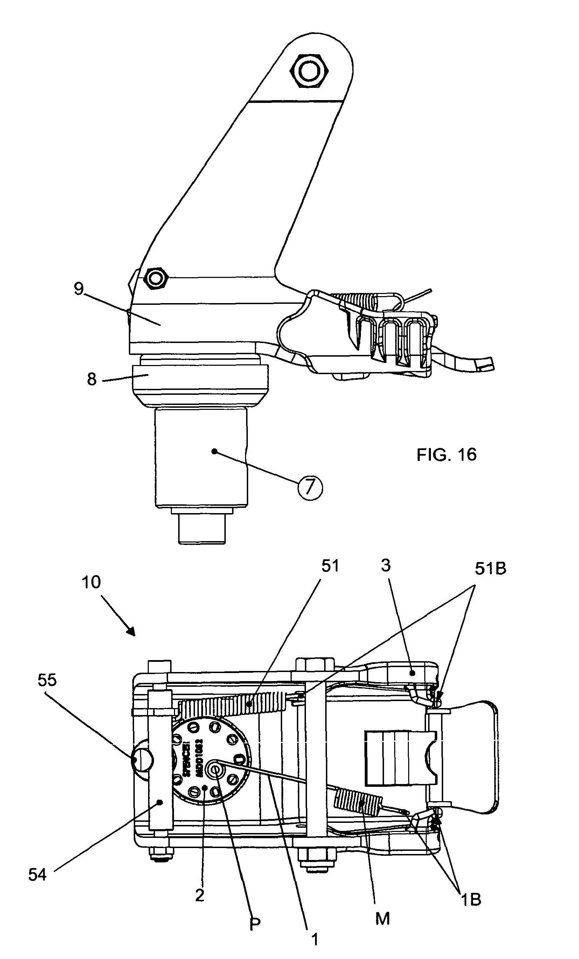

Referring to Figures 16, 17, 18, 19, 20, an additional variant embodiment of the inventive wheel will be described, which comprises a directional stabilizer system or mechanism.

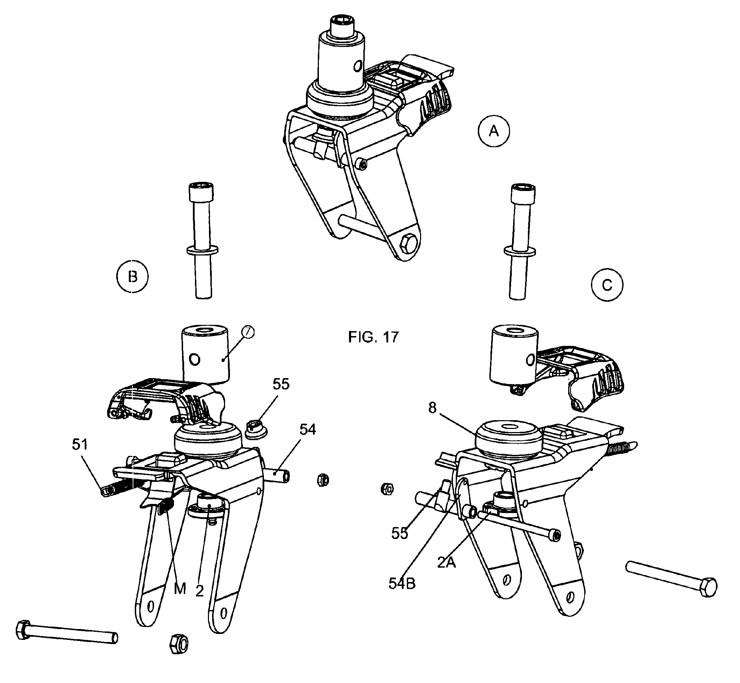

Particularly referring to Figures 16 and 17, numeral 10 still designates the wheel which generally also comprises a lock means 55, engaging into a corresponding seat 2A, in this example formed on the nut 2 that supports the pin P and the spring M. While the seat is shown as being formed in the nut, such seat and the stabilizer device 55 may be also located in other positions, as long as they are able to operate on a corresponding means/enclosure coaxial with the axis of rotation BB.

The lock means is returned in position, i.e. against the nut and/or the seat 2A by a spring 15 integral with the fork at 51B.

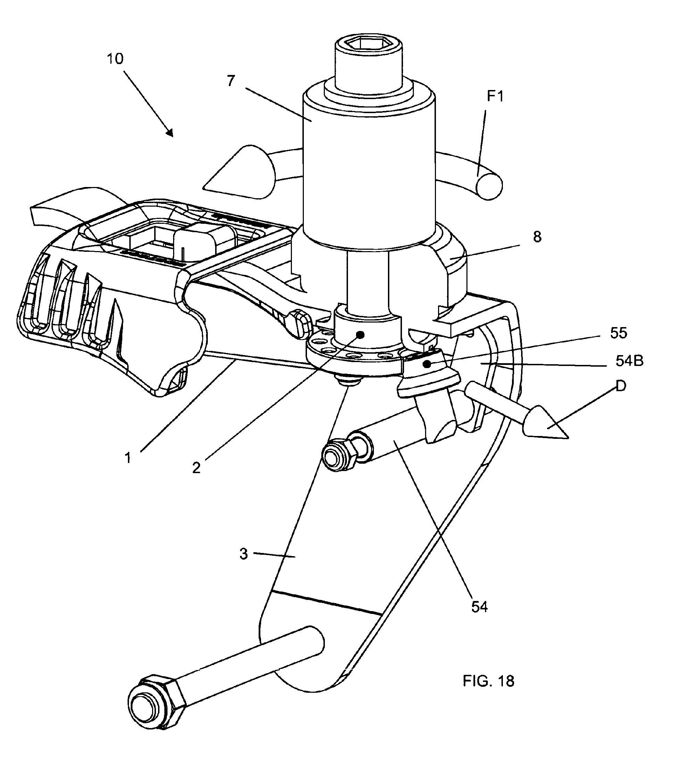

Figure 18 shows the operation in detail.

The lock means 55 (also known as stabilizer) is integral with a pin 54 that may be rotated about its axis 54A by a lever control 54B and said spring 51.

In a given configuration, preferably having a rectilinear extension, the lock means 55 is accommodated in the seat 2A of the nut 2; in this state the wheel 5 is locked.

The wheel 5 is unlocked by exerting a lateral rotation stress of such intensity as to impart a rotation F1 that is large enough to disengage the means 55 from the seat 2A in a disengagement direction, designated by D in Figure 7.

The means 55 will be released as it will abut against the circular profile of the nut 2 which will possibly prevent any locking thereof - because the seat 2A will be located at such means 55.

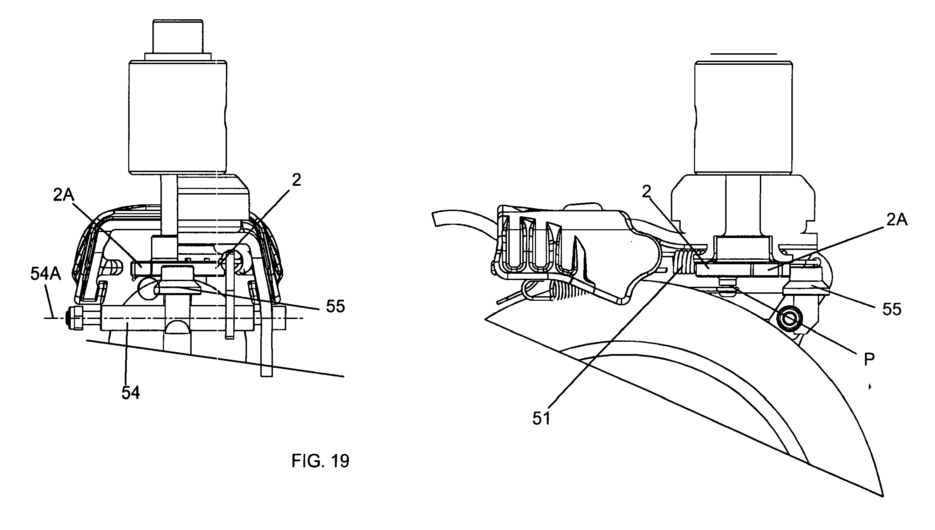

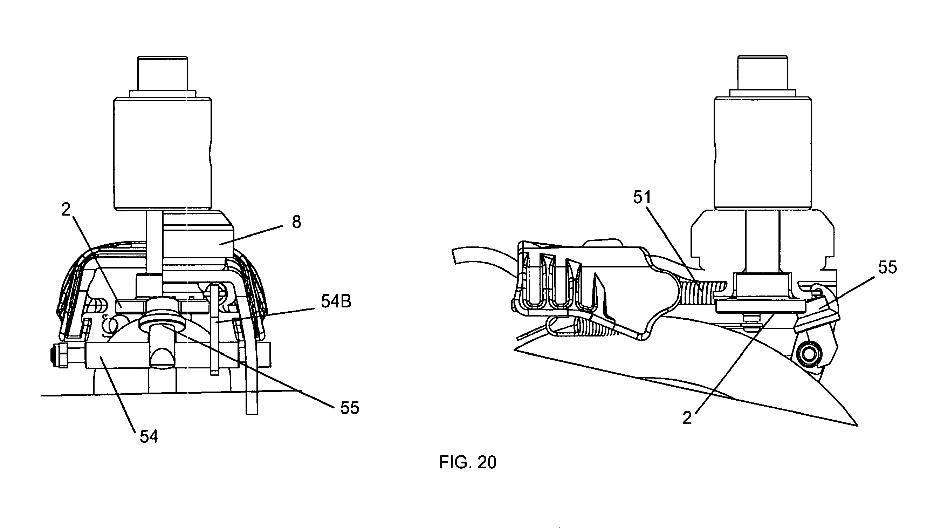

These two limit states are shown in the annexed Figures 19 and 20, which show the wheel in the locked condition (lock 55 engaged in the seat 2A) and in the unlocked condition (lock 55 disengaged from the seat 2A).

Upon realignment with the seat 2A, the action of the spring 51 will return the lock 55 into said seat 2A and will generally provide stabilization of the rotatable support.

According to a further variant, not shown, the lock means 55 and its seat 2A may also be located in positions other than that illustrated herein, as long as they are able to operate coaxial with the axis of rotation BB.

For instance, while the figure shows the means retained in the support 3 of the wheel 5, in this variant embodiment, it may operate external thereto and particularly above the fork, between the fork 3 and the arm 6 or above the arm 6.

## Claims

1. A rotatable wheel support (10), used for transferring carriages, stretchers, chairs, etc., of the type comprising a fork (3), freely rotating about a corresponding fixed vertical axis (BB), with downward lateral prongs (3B) for holding a wheel (5) that rotates about an axis of rotation (AA) parallel to the transfer plane, whereas the upper part (3C) is integral with a corresponding bearing (8) via a ring (7), through a nut (2); said bearing (8) being in turn integral with the corresponding support arm (6) via a sleeve (9), said rotatable wheel support (10) further comprising a rod or rope (1) which is capable of being extended by means of a return spring (M) **characterized in that** said return spring (M) is secured between a rear swinging part (R) of the fork (3) and a fixed offset block (P) located on the nut (2) or the ring (7) of the fork (3); so that,
if the support (10) and the axis (BB) form an angle (α) other than that of a maximum stability condition, in which the spring (M) unstretched, the action of the rod or rope (1) with the spring (M) returns said support (10) to alignment, in the above determined maximum stability configuration
by changing the position of the fixed offset block (P), the extension of the return spring (M) may be neutralized throughout the various angles (α) of rotation of the support (10) relative to the fixed axis (BB), to obtain infinite maximum stability positions.

2. A rotatable wheel support (10) as claimed in claim 1, **characterized in that** the rope or rod (1) is capable of being extended by means of the return spring (M).

3. A rotatable wheel support (10) as claimed in claim 1, **characterized in that** said fixed offset block (P) extends downwards from the nut (2) or the ring (7) and is offset from the central point (C) of said nut (2) and/or ring (7).

4. A rotatable wheel support (10) as claimed in claim 1, **characterized in that** said fixed offset block (P) is angularly adjustable using the nut (2) or the ring (7).

5. A rotatable wheel support (10) as claimed in claim 1, **characterized in that** a seat (2A) is formed on the profile of said nut (2) for receiving a lock means (55) which is adapted to stabilize the wheel (5) in position; said stabilization state being maintained until exertion of one or more lateral stresses of such an intensity as to impart a rotation large enough as to disengage the means (55) from the seat (2A).

6. A rotatable wheel support (10) as claimed in claim 5, **characterized in that** said means (55) is returned into the corresponding seat (2A) by a spring (51) integral with the fork.

## Patentansprüche

1. Drehbarer Radträger (10), verwendet für die Übertragung von Kutschen, Bahren, Stühlen usw., des Typs umfassend eine Gabel (3), die um eine entsprechende feste senkrechte Achse (BB) frei drehbar ist, mit nach unten seitlichen Zinken (3B) um ein Rad (5) zu halten, das um eine parallel zur Übertragungsebene Drehachse (AA) dreht, wobei das obere Teil (3C) mit einem entsprechenden Lager (8) mittels eines Ringes (7) durch eine Mutter (2) integriert ist; wobei das besagte Lager (8) wiederum mit dem entsprechenden Tragarm (6) mittels einer Hülse (9) integriert ist, wobei der besagte drehbare Radträger (10) ferner eine Stange oder ein Seil (1) umfasst, die in der Lage sind, sich mittels einer Rückfeder (M) zu erweitern, **dadurch gekennzeichnet, dass** die besagte Rückfeder (M) zwischen einem hinteren Schwingteil (R) der Gabel (3) und einem festen auf der Mutter (2) oder dem Ring (7) der Gabel (3) gelegenen Offset Block (P) so gesichert ist, dass wenn der Träger (10) und die Achse (BB) einen Winkel (α) zwischen sich bilden, der verschieden von dem ist, der eine maximale Stabilitätslage entspricht, in der die Feder (M) nicht gestreckt ist, die Wirkung der Stange oder des Seils (1) den besagten Träger (10) in Ausrichtung in die oben genannte maximale Stabilitätslage zurückführt,
wenn die Lage des festen Offset Blocks (P) verändert wird, kann die Dehnung der Rückfeder (M) mittels der verschiedenen Drehwinkeln (α) des Trägers (10) mit Bezug auf der festen Achse (BB) vernichtet werden, um unendliche Lagen maximaler Stabilität zu erreichen.

2. Drehbarer Radträger (10) nach Anspruch 1, **dadurch gekennzeichnet, dass** das Seil oder die Stange (1) in der Lage sind, sich mittels der Rückstellfeder (M) zu erweitern.

3. Drehbarer Radträger (10) nach Anspruch 1, **dadurch gekennzeichnet, dass** der besagte feste Offset Block (P) sich nach unten aus der Mutter (2) erstreckt, oder der Ring (7) von der Mitte (C) der besagten Mutter (2) und/oder Ringes (7) versetzt ist.

4. Drehbarer Radträger (10) nach Anspruch 1, **dadurch gekennzeichnet, dass** das besagte feste Offset Block (P) winkelverstellbar ist, wobei entweder die Mutter (2) oder der Ring (7) verwendet werden.

5. Drehbarer Radträger (10) nach Anspruch 1, **dadurch gekennzeichnet, dass** ein Sitz (2A) auf dem Umriss der besagten Mutter (2) gebildet ist, um eine Sperre (55) zu aufnehmen, die so angepasst ist, dass das Rad (5) in seiner Lage stabilisiert wird; wobei der besagte stabiler Zustand so lange beibehalten wird, bis wenn eine oder mehrere seitliche Beaufschlagungen ausgeübt werden, die eine solche Intensität besitzen, dass sie eine solche Drehung vermitteln können, die groß genug ist, um die Sperre (55) von der Sitz (2A) zu lösen.

6. Drehbarer Radträger (10) nach Anspruch 5, **dadurch gekennzeichnet, dass** die besagte Sperre (55) in den entsprechenden Sitz (2A) zurückgegeben wird, mittel einer Feder (51) die mit der Gabel integriert ist.

## Revendications

1. Un support de roue (10) rotatif, utilisé pour transférer des chariots, brancards, chaises, etc.., du type comprenant une fourche (3) librement tournant autour d'un correspondant axe fixe vertical (BB), avec des griffes latérales (3B) vers le bas pour tenir une roue (5) qui tourne autour d'un axe de rotation (AA) parallèle au plan de transfert, tandis que la partie supérieure (3C9 est intégrée avec on correspondant coussinet (8) par un anneau (7), par un écrou (2) ; le dit coussinet (8) étant à fois intégré avec le correspondant bras de support (6) par un manchon (9), le dit support de roue (10) en outre comprenant une tige ou une corde (1) qui sont en gré d'être étendus par un ressort de retour (M), **caractérisé en ce que** le dit ressort de retour (M) est fixé entre une partie oscillante arrière (R) de la fourche (3) et un offset block (P) fixe situé sur l'écrou (2) ou l'anneau (7) de la fourche (3) ; de sorte que
si le support (10) e l'axe (BB) forment un angle (α) différent de celui d'une condition de stabilité maximale, dans laquelle le ressort (M) n'est pas étendu, l'action de la tige ou de la corde (1) avec le ressort (M) fait retourner le dit support (10) en alignement, dans la configuration de stabilité maximale ci-dessus déterminée,
en changeant la position de l'offset block (P) fixe, l'extension du ressort de retour (M) peut être neutralisée par les différents angles de rotation (α) du support (10) relatives a l'axe fixe (BB) ; pour obtenir des postions infinites de stabilité maximale.

2. Support rotatif de roue (10) selon la revendication 1, **caractérisé en ce que** la tige pu la corde (1) sont en gré d'être étendus par le ressort de retour (M).

3. Support rotatif de roue (10) selon la revendication 1, **caractérisé en ce que** le dit offset block (P) fixe s'étend vers le bas de l'écrou (2) ou de l'anneau (7) et est décalé du point central (C) du dit écrou (2) et/ou anneau (7).

4. Support rotatif de roue (10) selon la revendication 1, **caractérisé en ce que** le dit offset block (P) fixe peut être réglé angulairement avec l'emploi de l'écrou (2) ou de l'anneau (7).

5. Support rotatif de roue (10) selon la revendication 1, **caractérisé en ce que** une siège (2A) est formée sur le profil du dit écrou (2) pour recevoir un moyen de blocage (55) qui est apte à stabiliser la roue (5) en position ; le dit état de stabilisation étant maintenu jusqu'à l'application d'une ou plusieurs sollicitations latérales avec une intensité telle pour impartir une rotation de gradeur suffisante pour séparer les moyens (55) du siège (2A).

6. Support rotatif de roue (10) selon la revendication 5, **caractérisé en ce que** les dits moyens (55) sont retournés dans le correspondant siège (2A) par un ressort (51) intégral avec la fourche.
